# EUROPEAN PATENT APPLICATION

(11) **EP 2 412 525 A1**
(43) Date of publication of application: **01.02.2012**
(21) Application number: 11006287.4
(22) Date of filing: 29.07.2011
(51) Int. Cl.: B32B 33/00, F03D 1/04, H01Q 17/00

(54) **Wind turbine with reduced radar signature**

(30) Priority: 29.07.2010 US 845827
(71) Applicant: Flodesign Wind Turbine Corp., Waltham, MA 02453 (US)
(72) Inventor: Presz, Walter M. Jr., Wilbraham Massachusetts 01095 (US); Kowalski, Stanley III, Wilbraham Massachusetts 01095 (US); Kennedey, Thomas J. III, Wilbraham Massachusetts 01095 (US)
(74) Representative: Banzer, Hans-Jörg

(57) **Abstract**

Various components of a shrouded wind turbine (100) are coated with carbonyl iron powder. The resulting wind turbine (100) has a reduced radar signature compared to conventional wind turbines.

## Description

This application is a continuation-in-part of U.S. Patent Application Serial No. 12/574,208, filed October 6, 2009. That application claims priority to U.S. Provisional Patent No. 61/195,307, filed on October 6, 2008. Both applications are hereby fully incorporated by reference in their entirety.

The present disclosure relates to wind turbines. In particular, the wind turbines have a reduced radar signature compared to conventional wind turbines.

A conventional open propeller blade type wind turbine typically includes blades of up to 150 feet or more in length rotating about an axis, producing a swept area having a diameter of 300 feet and consequently a very large radar cross section. Wind turbines of the existing open blade type have been found to degrade the performance of air traffic control and air defense radar by causing sudden or intermittent appearance of radar contacts at the location of the wind turbine, due to the blade motion or rotation of the turbine into the wind. This degradation in performance is particularly strong if the wind turbine is located within the radar line of sight of the radar antenna, particularly at ranges within five miles of the radar antenna. The motion of the wind turbine blades or the turning of the turbine assembly for wind alignment can be particularly troublesome for Doppler radar systems.

In addition, the wind turbine may cause direct interference by virtue of high reflectivity reducing the radar sensitivity and may produce false images (ghosting) or shadow areas (dead zones). The motion of the large rotor blades or the turning of the turbine assembly for wind alignment may also create false targets in Doppler radar systems.

The strength of a reflected radar signal depends not only upon the power level of the radar system, but how large or efficient a reflector of radar energy the reflecting object is. This largeness or size factor is commonly referred to as a Radar Cross Section (RCS). For the same amount of radar energy, objects with a large RCS reflect proportionately a larger amount of radar energy than an object with a lower RCS and are thus easier to detect. RCS is normally expressed in terms of decibel square meters (dBsm), a logarithmic expression of an object's radar reflecting surface area.

It would be desirable to provide a wind turbine with a lower radar signature than that of existing open blade wind turbines.

### SUMMARY

According to the invention, a wind turbine as defined in claim 1, and a method as defined in claim 16 are provided. The dependent claims define preferred and advantageous embodiments of the invention. The present disclosure describes wind turbines which have a reduced radar cross section. The disclosure also described methods of reducing the radar signature of a wind turbine by applying a surface coating of radar absorbent material to the wind turbine to thereby minimize the reflectivity of a transmitted radar signal. In particular, the radar absorbent coating may comprise a coating containing carbonyl iron powder.

In another version, the radar absorbent coating may be in the form of relatively thin tiles formed of a synthetic polymer matrix having particles of a ferric compound interspersed therein. The synthetic polymer material may be a neoprene material. The radar absorbent coating may also be applied by spraying.

Disclosed in embodiments is a wind turbine comprising a fan; a shroud disposed about the fan; and a coating of radar absorbent material. The wind turbine may also be a three bladed horizontal axis wind turbine (HAWT) where the coating is applied to the entire turbine, the turbine blades, or a portion of the blades.

The radar absorbent coating may comprise a carbonyl iron powder. The radar absorbent coating may be applied by spraying. The coating may also be formed from at least one tile, the tile comprising a synthetic polymer matrix having ferric compound particles interspersed therein. The synthetic polymer matrix may comprise neoprene.

The radar absorbent coating may be located on a leading edge of the shroud; an exterior of the shroud; at least one blade of either a rotor or a stator; a leading edge of an ejector; and/or an exterior of an ejector. In some embodiments, the radar absorbent coating is located on a leading edge of the shroud, an exterior of the shroud, a leading edge of the ejector, and an exterior of the ejector.

Disclosed in other embodiments is a ejector shroud wind turbine, comprising: a shroud having a plurality of lobes on a trailing edge thereof; a fan located within the shroud; a ejector shroud having a plurality of lobes on a trailing edge thereof, wherein the ejector shroud is located downstream of the shroud; and a coating of radar absorbent material located on the turbine.

The radar absorbent coating can be located on the shroud and/or the ejector shroud.

Also disclosed is a method of reducing the radar signature of a wind turbine comprising: providing a wind turbine having a shroud surrounding a fan assembly; and applying a coating of radar absorbent material to the wind turbine.

The coating can be applied by laminating tiles formed of a synthetic polymer matrix having particles of a ferric compound interspersed therein to a surface of the wind turbine or by spraying the coating onto a surface of the wind turbine.

Also disclosed in embodiments is a horizontal axis wind turbine comprising a nacelle and blades, and a coating of radar absorbent material located on the turbine. The coating of radar absorbent material may be located on the blades of the turbine, or on the nacelle.

These and other non-limiting features or characteristics of the present disclosure will be further described below.

### BRIEF DESCRIPTION OF THE DRAWINGS

The following is a brief description of the drawings, which are presented for the purposes of illustrating the disclosure set forth herein and not for the purposes of limiting the same.

FIGURE 1 shows a side view and a perspective view of one embodiment of a wind turbine mounted on a mast.

FIGURE 2 shows a side view and a perspective view of another embodiment of a wind turbine employing mixer lobes.

FIGURE 3 shows a side view and a perspective view of another embodiment of a wind turbine employing mixer lobes and an ejector.

FIGURE 4A is a perspective view of a wind turbine with an ejector having mixer lobes on the downstream edge thereof.

FIGURE 4B is an exploded view of the wind turbine of FIGURE 4A.

FIGURE 5 shows a front view and a perspective view of another embodiment of a wind turbine employing a three-bladed impeller.

FIGURE 6A is a front view comparing the radar cross section of a conventional wind turbine having open blades with a shrouded wind turbine of the present disclosure, both turbines having the same generating capacity.

FIGURE 6B is a side view of the conventional wind turbine and the shrouded wind turbine of the present disclosure, as described in FIGURE 6A.

FIGURE 7 is a side view illustrating radar waves striking and reflecting from an open blade wind turbine.

FIGURE 8 is a side view illustrating radar waves striking and reflecting from a shrouded wind turbine of the present disclosure.

FIGURE 9 is a cross section of an embodiment of a wind turbine of the present disclosure, with a portion thereof enlarged to show a radar absorbent coating.

FIGURE 10 shows the radar cross section for various objects, including a conventional 1.5MW open blade wind turbine.

### DETAILED DESCRIPTION

A more complete understanding of the processes and apparatuses disclosed herein can be obtained by reference to the accompanying drawings. These figures are merely schematic representations based on convenience and the ease of demonstrating the existing art and/or the present development, and are, therefore, not intended to indicate relative size and dimensions of the assemblies or components thereof.

Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

Generally, the present disclosure includes a wind turbine that has a reduced radar signature. The reduced radar signature is due to several factors, including reduced blade diameter, lack of external moving parts, and the use of a radar energy absorbing surface on the wind turbine.

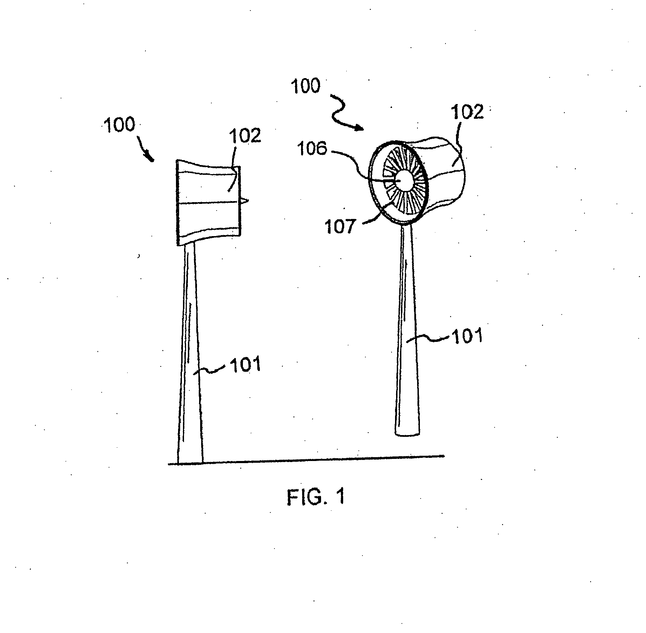

Referring to FIGURE 1, a first embodiment of a wind turbine 100 is shown in a side view and a perspective view.

The turbine 100 comprises a fan surrounded by a shroud 102. The fan may generally be any assembly in which blades are attached to a shaft and able to rotate, allowing for the generation of power or energy from wind rotating the blades. As illustrated here, the fan is a rotor-stator assembly. The stator 106 has multiple blades or vanes 107 and is surrounded by the shroud 102 extending in a downstream direction beyond a multi-bladed rotor (not shown) which is situated downstream of and immediately adjacent the stator 106. The turbine 100 is supported on a mast 101 at a desired distance above a support base, which may be the surface of a building or structure on a vessel, such as a water craft, or the surface of the earth. As desired, the mast 101 can be configured to allow the turbine 100 to rotate freely about the axis of the mast.

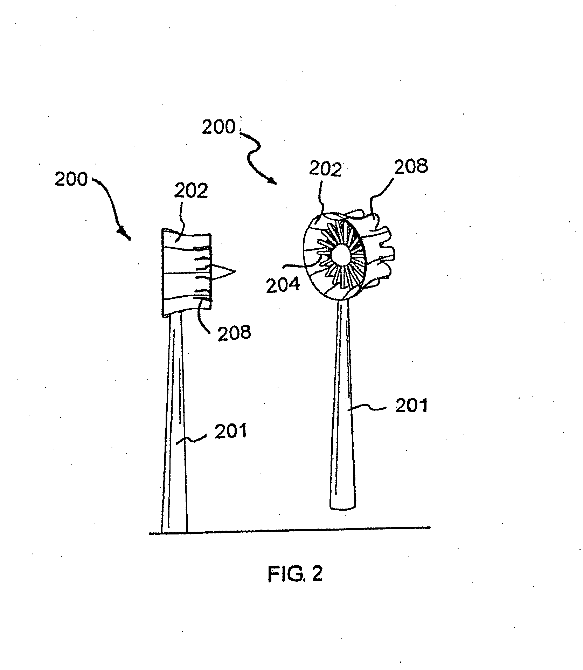

Referring to FIGURE 2, another embodiment of a wind turbine 200 is shown in a side view and a perspective view. The turbine 200 has a multi-vaned stator 204 surrounded by a shroud 202 which has the trailing or downstream edge thereof configured with lobes 208 for effecting mixing of the air exiting the turbine with the air flowing over the exterior of the shroud 202. A rotor (not shown) is disposed downstream of and immediately adjacent the stator 204. The turbine assembly 200 is similarly supported on a mast 201.

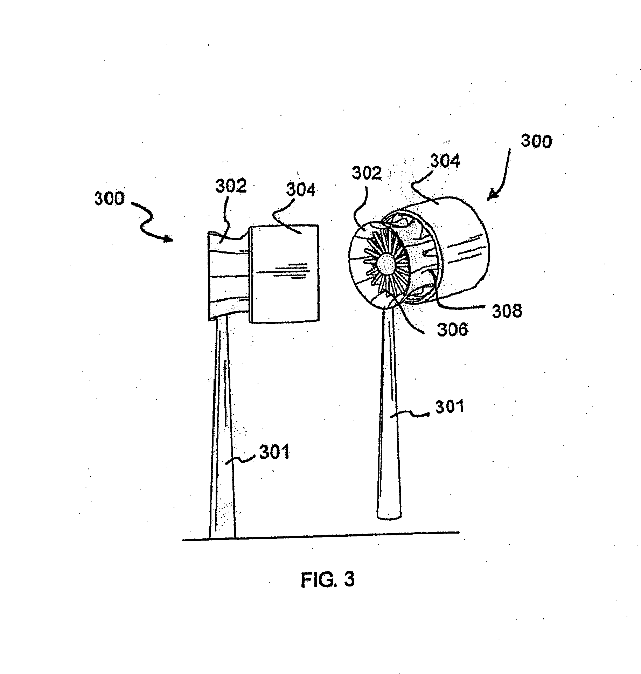

Referring to FIGURE 3, another embodiment of a wind turbine 300 is shown in a side view and a perspective view. The turbine 300 has a stator 306 surrounded by a shroud 302 having mixer lobes 308 formed on the downstream edge thereof. A rotor (not shown) is disposed downstream of and immediately adjacent stator 306. The turbine 300 further includes an ejector 304 surrounding the shroud with lobes 308 for effecting further mixing of additional free stream air through the stator vanes 306 and the rotor. The turbine 300 of FIGURE 3 is similarly supported on a mast 301 connected to the shroud 302.

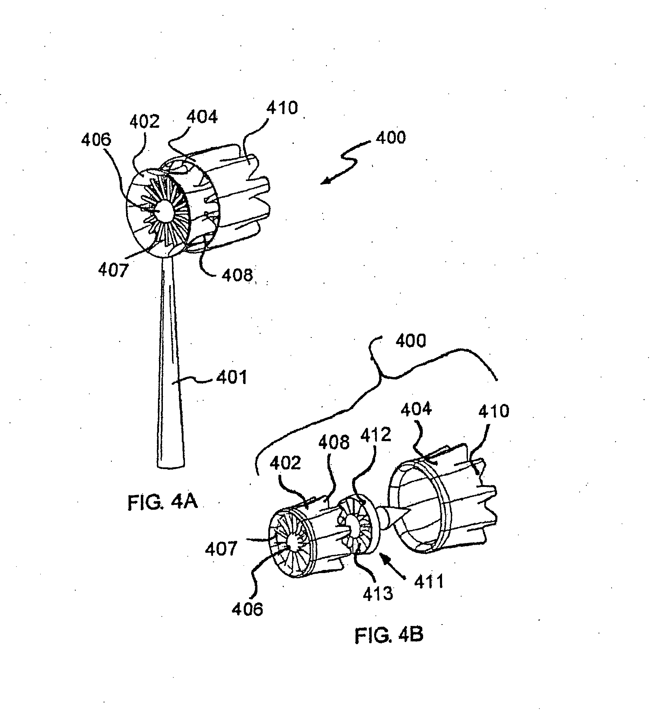

FIGURE 4A is another embodiment of a wind turbine of the present disclosure, in a form also known as a ejector shroud wind turbine (MEWT). The MEWT is a new type of wind turbine that uses a shrouded impeller, prop, or rotor/stator to improve the efficiency of a wind turbine such that more power may be extracted for a turbine having the same area than other current types of wind turbines. The MEWT accomplishes this by drawing air from a larger area than the most common type of wind turbine, the horizontal-axis wind turbine (HAWT).

A wind turbine can theoretically capture at most 59.3% of the potential energy of the wind passing through it, a maximum known as the Betz limit. The amount of energy captured by a wind turbine can also be referred to as the efficiency of the turbine. The MEWT may exceed the Betz limit.

Referring to FIGURE 4A, the turbine 400 comprises a fan located at an intake end of a mixer shroud 402. The fan may generally be any assembly in which blades are attached to a shaft and able to rotate, allowing for the generation of power or energy from wind rotating the blades. As illustrated here, the fan is a rotor-stator assembly. The stator 406 engages the shroud 402, and the rotor (not shown) engages a motor/generator (not shown). The stator 406 has stationary blades 407 which turn the air before it reaches the rotor. The blades of the rotor then rotate, generating power in the generator. The shroud 402 comprises a ringed airfoil, or in other words is approximately cylindrical and has an airfoil shape, with the airfoil configured to generate relatively lower pressure within the shroud (i.e. the interior of the shroud) and relatively higher pressure outside the shroud (i.e. the exterior of the shroud). The fan and the motor/generator are contained within the shroud. The shroud 402 may also have mixer lobes 408. The mixer lobes generally cause the exhaust end of the shroud, where air exits, to have a generally peak-and-valley shape about its circumference. Put another way, the lobes 408 are located along the trailing edge of the shroud.

The turbine 400 also comprises an ejector shroud 404, which is engaged with the shroud. The ejector shroud comprises a ringed airfoil, or in other words is approximately cylindrical and has an airfoil shape, with the airfoil configured to generate relatively higher pressure within the ejector shroud (i.e. the annular area between the mixer shroud 402 and the ejector shroud 404) and relatively lower pressure outside the ejector 404. The ejector may also have mixer lobes 410, in which case the ejector is then referred to as a mixer-ejector shroud. The mixer lobes generally cause the exhaust end of the ejector, where air exits, to have a generally peak-and-valley shape about its circumference. Put another way, the mixer lobes are located along the trailing edge of the ejector 404.

The ejector shroud 404 has a larger diameter than the mixer shroud 402. The shroud 402 engages the ejector shroud 404. Put another way, the exhaust end of the mixer shroud fits within the intake end of the ejector shroud, or the intake end of the ejector shroud surrounds the exhaust end of the mixer shroud. The mixer shroud 402 and ejector shroud 404 are sized so that air can flow between them. Phrased another way, the ejector shroud 404 is concentrically disposed about the shroud 402 and is downstream of the shroud 402. The fan, mixer shroud 402, and ejector shroud 404 all share a common axis.

The mixer lobes 408, 410 allow for advanced flow mixing and control. The mixer shroud and ejector shroud are different from similar shapes used in the aircraft industry because in the MEWT, the air flow path provides high-energy air into the ejector shroud. The mixer shroud provides low-energy air (after energy has been extracted by the rotor) into the ejector shroud, and the high-energy air outwardly surrounds, pumps, and mixes with the low-energy air.

The motor/generator may be employed to generate electricity when the wind is driving the rotor. The generator on the turbine may also be used as a motor to drive the fan, and thus draw air into and through the turbine 400, when the wind is insufficient to drive the rotor.

Referring to FIGURE 4B, the wind turbine 400 is shown in exploded view. The rotor 411 has a plurality of radial blades 413 surrounded by a ring 412 connected to the outer ends of the blades 413. The mixing lobes 408 of the mixer shroud 402 generally fit within the front end of the ejector shroud 404, such that an air stream can flow through a space between the mixer shroud 402 and the ejector shroud 404.

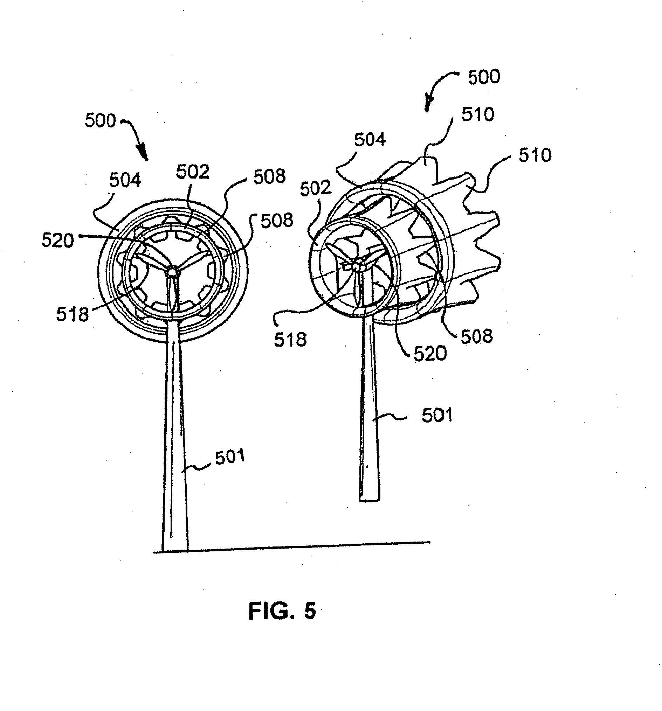

Referring to FIGURE 5, another embodiment of a wind turbine 500 is shown in a front view and a perspective view. The turbine 500 includes an impeller 518 having aerodynamically configured blades for efficient extraction of energy from the free stream. The impeller 518 is surrounded by a mixer shroud 502 having downstream mixing lobes 508 provided on the trailing edge thereof. The lobes 508 are surrounded by an ejector shroud 504 having mixing lobes 510 provided about the downstream or trailing periphery thereof. The wind turbine 500 of FIGURE 5 is supported on a suitable mast 501 which may extend through the shroud 502 to support a motor/generator 520 and the impeller 518.

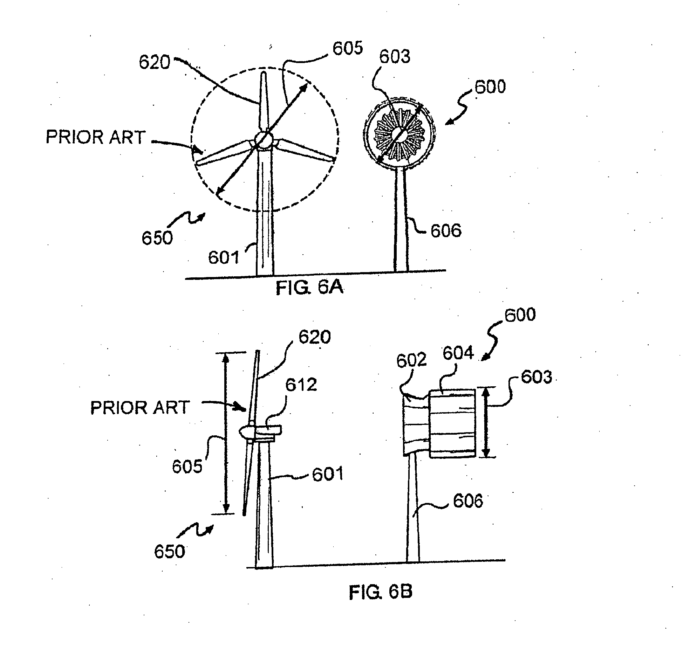

FIGURE 6A is a front view comparing the radar cross section of a conventional wind turbine having open blades (left hand side) with a shrouded wind turbine of the present disclosure (right hand side), both turbines having the same power generating capacity. The prior art open blade wind turbine 650 is mounted on a mast 601 and has a swept area of diameter 605 as the blades 620 rotate, resulting in a radar cross section indicated by the dashed outline. In contrast, the wind turbine 600 of the present disclosure has a much smaller swept area of diameter 603, resulting in a smaller radar cross section.

FIGURE 6B is a side view comparing the radar cross section of a conventional wind turbine having open blades (left hand side) with a shrouded wind turbine of the present disclosure (right hand side), both turbines having the same power generating capacity. Again, the conventional wind turbine 650 with open impeller blades 620 has a radar cross section based on swept area of diameter 605 and drives a generator which is mounted on mast 601 and located within nacelle 612. The shrouded wind turbine 600 has a smaller swept area of diameter 603. The stator, mixer shroud 602, and ejector shroud 604 prevent the blades of the shrouded wind turbine from being "seen" by radar.

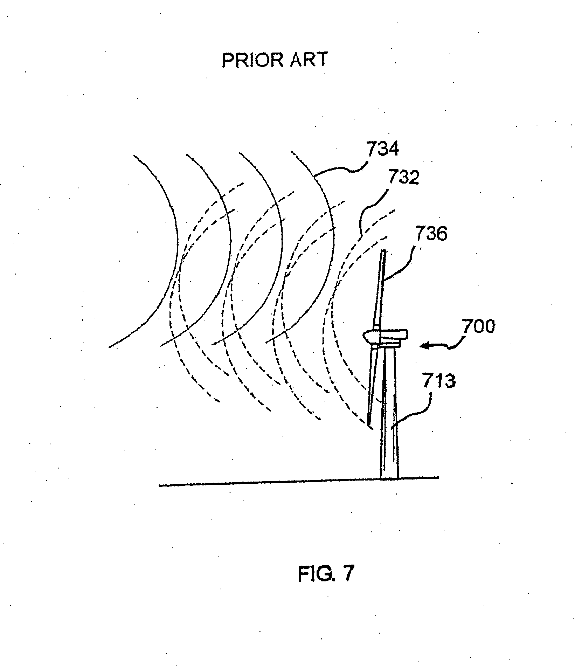

FIGURE 7 is a side view of a conventional wind turbine 700, which is mounted on a mast 713 and has open blades 736. An incoming radar wave 734 is shown in solid line and strikes the blades 736. The reflected wave 732 is indicated in dashed line. The reflected energy or wave 732 may also cause a second fainter return known as "multi-bounce," which occurs when incoming wave 734 is reflected by the turbine blade 736, then the turbine tower 713, and then again by the blade 736, before returning to the radar source.

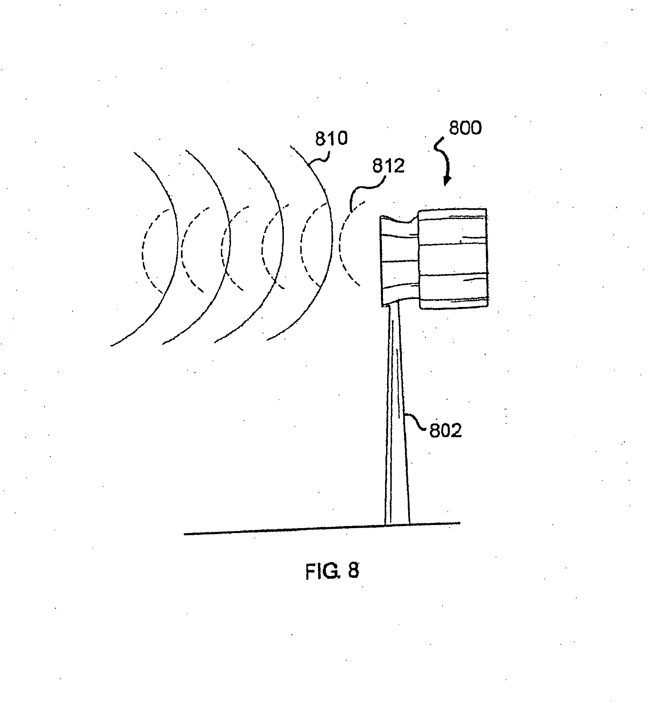

FIGURE 8 is a side view of a shrouded wind turbine 800 of the present disclosure. The turbine 800 is also mounted on a mast 802. An incoming radar wave 810 is shown in solid line and, upon contacting the turbine 800, creates reflected wave 812 illustrated in dashed line. The shroud and ejector of the wind turbine eliminate the multi-bounce of the conventional turbine of FIGURE 7. In addition, the reflected wave 812 is much smaller because the blades (not shown) of the shrouded wind turbine 800 are smaller, resulting in a reduced radar signature.

One advantage of a shrouded wind turbine is that they are more efficient than conventional open-bladed wind turbines. In particular, shrouded turbines with a mixer ejector (MEWT) can provide efficiencies in excess of the Betz limit of 59.3%. Thus, a shrouded wind turbine can have a much smaller rotor diameter than an open blade wind turbine, yet extract the same amount of wind energy. Thus, a ejector shroud wind turbine (MEWT) can be mounted on top of a building or closer to the ground because the clearance for a lengthy rotor blade is eliminated.

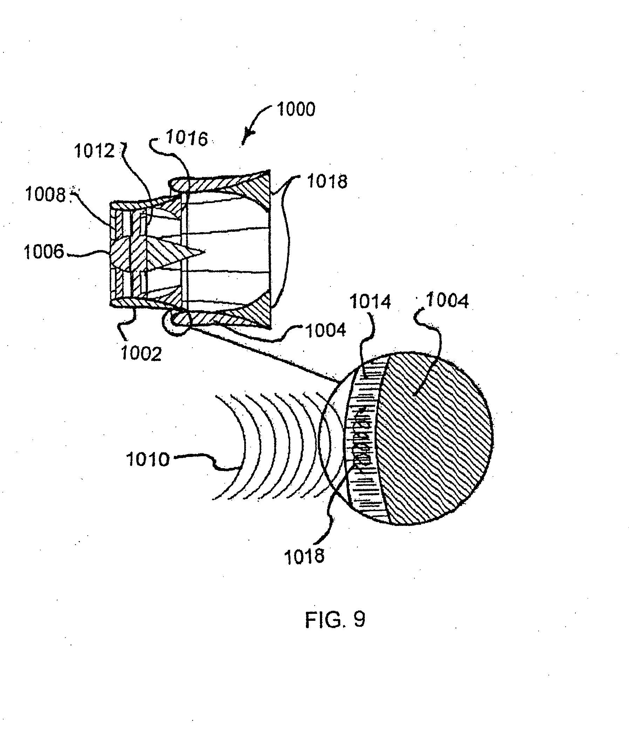

FIGURE 9 is a cross-sectional view of a shrouded wind turbine 1000. The turbine 1000 has vanes 1008 disposed on stator 1006 and a multi-bladed rotor 1012. A mixer shroud 1002 surrounds the stator 1006 and rotor 1012, and has a ring of mixer lobes 1016 disposed about the downstream periphery thereof. The mixer shroud 1002 has disposed thereabout and adjacent thereto on the downstream side an annular streamlined ejector shroud 1004 which also has a plurality of mixer lobes 1018 disposed about the downstream periphery thereof.

Referring to the encircled portion of the view of FIGURE 9 as enlarged, a portion of the upstream or leading edge of the ejector shroud 1004 has a coating 1014 of radar absorbent material disposed thereon. The material 1014 is operative to absorb incoming or transmitted radar waves 1010, which are then dissipated as heat within the material, indicated pictorially as helical arrow 1018 in FIGURE 9.

The radar absorbent coating 1014 may comprise carbonyl iron compounds, such as carbonyl iron powder. Carbonyl iron powder is produced by thermal decomposition of iron pentacarbonyl (Fe(CO)₅), which was previously distilled to high purity. During the decomposition process, spherical iron layers form on a nucleus, thus developing a shell structure. The decomposition conditions determine the particle size distribution of the intermediate products and other properties.

Carbonyl iron powder generally comes in two grades, hard and soft. Hard grade carbonyl iron powder is produced from thermal decomposition without further chemical processing. Hard grade powder typically has an onion skin structure, or in other words has a spherical morphology made up of many spherical layers. Hard grade powder is also mechanically hard and generally contains up to 97.8% Fe. Soft grade carbonyl iron powder is produced by annealing hard grade powder under hydrogen. This causes the onion skin structure to be lost and to reduce the content of nitrogen, carbon, and oxygen in the powder. Soft grade powder typically has a polycrystalline structure, is mechanically soft, possesses excellent compaction properties, and contains up to 99.8% Fe. Carbonyl iron powder is commercially available from BASF. In particular embodiments, the carbonyl iron powder used in the radar absorbent coating is a hard grade powder. In more specific embodiments, the carbonyl iron powder has an average particle size of 4 microns (µm), and in other embodiments, an average particle size of from about 1 to about 8 microns. An exemplary hard grade carbonyl iron powder is BASF carbonyl iron powder ER grade.

The coating may be applied as a spray or incorporated into a polymer matrix and then applied as laminated tiles onto the wind turbine. In some embodiments, a laminated tile is formed from a synthetic polymer matrix, such as neoprene, with particles of a ferric compound interspersed therein. The radar absorbent coating may be applied to any or all parts of the wind turbine, including, for example, the leading edge and/or the exterior of the shroud, the leading edge and/or the exterior of the ejector, the blades of the stator, the blades of the rotor, and/or the mast. Any desired combination of these parts can be covered with the radar absorbent coating.

In operation, when a radar wave encounters the coating 1014, it creates a magnetic field within the metallic elements of the coating. This field has alternating polarity and dissipates the energy of the radar signal by converting a significant portion of the radar energy into heat. Although it is not expected that the resulting heat will be significant in light of the cooling effect of wind / air stream produced by the turbine itself, cooling mechanisms are also contemplated within the scope of the present disclosure. For example, the shroud and/or ejector may include spraying mechanisms for dispensing liquids, such as water, upon the radar absorbent coating.

It should be recognized that conventional wind turbines use large blades, such as about 150 feet in length. Such blades are subject to flexing and bending under wind loads and very high centrifugal forces in the high velocity outer regions of the blade. As a result, maintaining the adhesion of a radar absorbent coating to such blades is difficult. In contrast, the mixer shroud and the ejector shroud of a shrouded wind turbine are smaller and are substantially rigid and stationary objects as well, making the application of such coating much easier. However, a radar absorbent coating may be applied to a HAWT with the proper surface preparation and the proper polymer adhering the carbonyl iron powder to the HAWT blade. The coating could be applied to the entire turbine, the nacelle or body of the turbine, the front face of the turbine blades, the leading edge of the turbine blades, the rotor, or any combinations thereof.

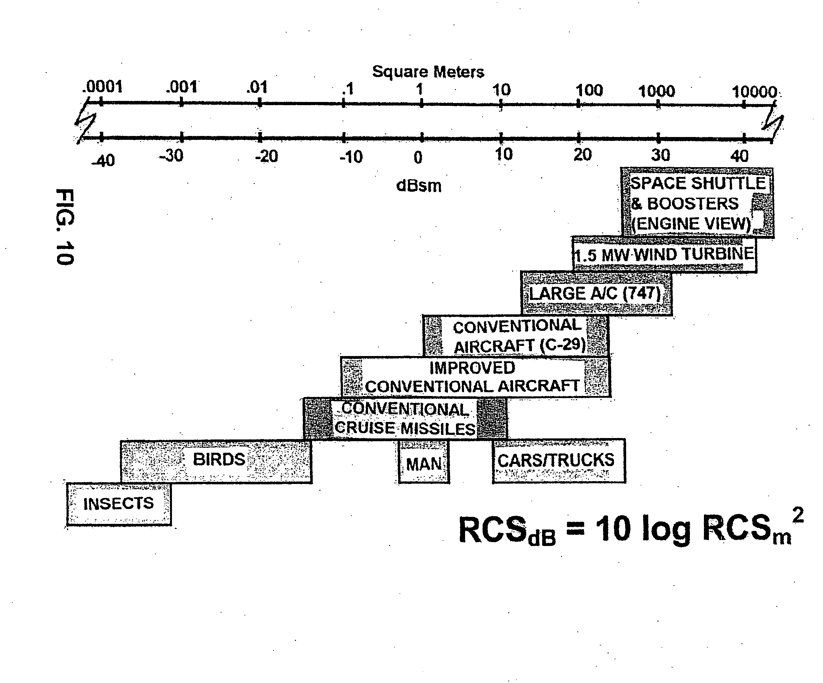

FIGURE 10 shows the radar cross section of various objects, including a 1.5MW wind turbine.

The systems and methods of the present disclosure have been described with reference to exemplary embodiments. Obviously, modifications and alterations will occur to others upon reading and understanding the preceding detailed description. It is intended that the exemplary embodiments be construed as including all such modifications and alterations insofar as they come within the scope of the appended claims or the equivalents thereof.

## Claims

1. A wind turbine (100; 200; 300; 400; 500; 600; 700; 800; 1000) comprising:
a fan (106, 107; 204; 306; 406, 407; 518, 520; 620; 736);
a shroud (102; 202; 302; 402; 502; 602; 1002) disposed about the fan; and
a radar absorbent coating comprising carbonyl iron powder.

2. The wind turbine (100; 200; 300; 400; 500; 600; 700; 800; 1000) of claim 1, wherein the radar absorbent coating is formed from at least one tile, the tile comprising a synthetic polymer matrix having the carbonyl iron powder interspersed therein.

3. The wind turbine (100; 200; 300; 400; 500; 600; 700; 800; 1000) of claim 1 or 2, wherein the synthetic polymer matrix further comprises neoprene.

4. The wind turbine (100; 200; 300; 400; 500; 600; 700; 800; 1000) of any one of claims 1-3, wherein the radar absorbent coating is located on a leading edge of the shroud (102; 202; 302; 402; 502; 602; 1002) or on an exterior of the shroud (102; 202; 302; 402; 502; 602; 1002).

5. The wind turbine (100; 200; 300; 400; 500; 600; 700; 800; 1000) of any one of claims 1-3, wherein the fan (106, 107; 204; 306; 406, 407; 518, 520; 620; 736) is a rotor-stator assembly, and the radar absorbent coating is located on at least one blade (107; 204; 306; 407; 518; 620; 736) of the stator (106; 306; 406; 520) or on at least one blade (107; 204; 306; 407; 518; 620; 736) of the rotor (106; 306; 406; 520).

6. The wind turbine (100; 200; 300; 400; 500; 600; 700; 800; 1000) of any one of claims 1-3, further comprising an ejector located downstream of the shroud (102; 202; 302; 402; 502; 602; 1002), wherein the radar absorbent coating is located on a leading edge of the ejector or on an exterior of the ejector (304).

7. The wind turbine (100; 200; 300; 400; 500; 600; 700; 800; 1000) of any one of claims 1-3 or 6, further comprising an ejector located downstream of the shroud (102; 202; 302; 402; 502; 602; 1002), wherein the radar absorbent coating is located on a leading edge of the shroud (102; 202; 302; 402; 502; 602; 1002), an exterior of the shroud (102; 202; 302; 402; 502; 602; 1002), a leading edge of the ejector (304), and an exterior of the ejector (304).

8. An ejector shroud (404; 504; 604; 1004) wind turbine (100; 200; 300; 400; 500; 600; 700; 800; 1000), comprising:
a shroud (202; 302; 402; 502) having a plurality of lobes (208; 308; 408, 410; 508) on a trailing edge thereof;
a fan (406, 407; 518; 520; 620) located within the shroud (402; 502; 602; 1002);
an ejector shroud (404; 504; 604; 1004) having a plurality of lobes (208; 308; 408, 410; 508) on a trailing edge thereof, wherein the ejector shroud (404; 504; 604; 1004) is located downstream of the shroud; and
a radar absorbent coating comprising carbonyl iron powder, the coating being located on the turbine.

9. The wind turbine (100; 200; 300; 400; 500; 600; 700; 800; 1000) of claim 8, wherein the radar absorbent coating is formed from at least one tile, the tile comprising a synthetic polymer matrix having the carbonyl iron powder interspersed therein.

10. The wind turbine (100; 200; 300; 400; 500; 600; 1000) of claim 8 or 9, wherein the radar absorbent coating is located on the shroud (102; 202; 302; 402; 502; 602; 1002) or on the ejector shroud (404; 504; 604; 1004).

11. The wind turbine (400; 500; 600; 1000) of any one of claims 8-10, wherein the radar absorbent coating is located on the shroud (402; 502; 602; 1002) and the ejector shroud (404; 504; 604; 1004).

12. A method of reducing the radar signature of a wind turbine (100; 200; 300; 400; 500; 600; 700; 800; 1000) comprising:
providing a wind turbine (100; 200; 300; 400; 500; 600; 700; 800; 1000) having a shroud (102; 202; 302; 402; 502; 602; 1002) surrounding a fan (106, 107; 204; 306; 406, 407; 518, 520; 620; 736) assembly; and
applying a coating of carbonyl iron powder to the wind turbine (100; 200; 300; 400; 500; 600; 700; 800; 1000).

13. The method of claim 12, wherein the step of applying includes laminating tiles formed of a synthetic polymer matrix having the carbonyl iron powder interspersed therein to a surface of the wind turbine (100; 200; 300; 400; 500; 600; 700; 800; 1000).

14. The method of claim 12 or 13, wherein the step of applying comprises spraying the coating onto a surface of the wind turbine (100; 200; 300; 400; 500; 600; 700; 800; 1000).

15. A horizontal axis wind turbine (600) comprising a nacelle (612) and blades (620), and a coating comprising carbonyl iron powder located on the turbine (600).

16. The turbine (600) of claim 15, wherein the coating is located on the blades (620) of the turbine (600).
